Europäisches Patentamt

European Patent Office

Office européen des brevets

(19)

(11) Publication number: **0 049 951**
**A2**

(12) **EUROPEAN PATENT APPLICATION**

(21) Application number: **81304158.9**

(22) Date of filing: **10.09.81**

(51) Int. Cl.3: **G 01 N 27/72**

(30) Priority: **10.10.80 GB 8032886**

(43) Date of publication of application:
**21.04.82 Bulletin 82/16**

(84) Designated Contracting States:
**BE DE FR GB IT NL SE**

(71) Applicant: **Exxon Research and Engineering Company**
**P.O.Box 390 200 Park Avenue**
**Florham Park New Jersey 07932(US)**

(72) Inventor: **Eliasson, Alf**
**Kornvivelvaegen 3**
**S-44400 Stenungsund(SE)**

(72) Inventor: **Tengberg, Freddy Fared Moneer**
**Eklandagatan 54B**
**S-41261 Goeteborg(SE)**

(72) Inventor: **Sandberg, Tore**
**Blasippevaegen 12**
**S-44400 Stenungsund(SE)**

(74) Representative: **Dew, Melvyn John**
**Esso Chemical Research Centre P.O. Box 1**
**Abingdon Oxfordshire, OX13 6BB(GB)**

(54) Device and method for measuring carburization in furnace tubes.

(57) Carburization on the inner surface of furnace tubes, which may lead to structural failure of the tubes, is monitored in situ by measuring the magnetic permeability of the tube. The effect of carburization is determined independantly of the presence of ferromagnetic oxides on the outer surface of the tube by generating two frequencies adjacent to the tube, one penetrating the entire tube wall and one limited to the surface layer only by the skin effect, and measuring the difference in e.m.f.s induced in detecting coils by these two signals.

FIG. 5

EP 0 049 951 A2

Croydon Printing Company Ltd.

## DEVICE AND METHOD FOR
## MEASURING CARBURIZATION IN FURNACE TUBES

This invention concerns a device and method for measuring of internal carburization of furnace tubes, and in particular concerns the non-destructive measurement of carburization on the inner surface of furnace tubes by monitoring the magnetic permeability of the tubes.

In the steam cracking of hydrocarbon feeds such as for the production of ethylene the feed is passed with steam through tubes mounted within a furnace which heats the outer surface of the tubes to very high temperatures, typically of from 1000° to 1100°C. The feed/steam mixture is heated within the tube to a temperature, typically of the order of 850°C, at which cracking takes place. Unfortunately at these high temperatures there is a significant degree of carburization of the inner surface of the furnace tubes as a result of diffusion of carbon into the tube metal. Carburization weakens the tube, and if undetected can result in holes or cracks forming in the furnace tube. The resulting leakage of hydrocarbons can be very dangerous, and means that the furnace must be shut down to make repairs.

It is therefore important to check the degree of carburization at intervals so that furnace tubes may be replaced before they become likely to break. This requires a reliable non-destructive testing method that can be used to monitor carburization in the furnace tubes.

Several techniques have been described for non-destructive testing of layers and flaws in conductive articles.

US 2955253 and US 3004215 disclose flow detection in pipes using internal probes. Such internal testing is not feasible for testing furnace tube _in situ_. Several prior art documents describe non-destructive testing of articles in which a test coil placed adjacent an object to be tested is excited by an oscillator and changes in the object are measured by their effect on the oscillator. Testing of this type is described in US 2797386, US 2939073, US 2806992 and US 2928043.

Testing apparatus is also known in which ferromagnetic objects such as pipes are magnetized and disturbences in flux caused by flaws are monitored. Examples are described in US 2882488, US 2980850, US 3202914 and US 2998566.

In US 2996662 a system for locating defects a constant frequency A.C. signal generates an alternating field in the object under test. A signal detected by a pick-up coil is combined in the original A.C. signal after the latter has been fed through a phase splitter. A particular harmonic of the combined signal is taken as a measure of flaws.

To withstand the high temperatures encountered furnace tubes are generally made of Ni-Cr stainless steels which are substantially non-magnetic, but the carburized layer which forms on the inner surface of the tube is ferro-magnetic. Accordingly, in the past the thickness of carburization has been measured by monitoring the magnetic permeability of the tube. Magnetic permeability might be measured by some of the techniques described above, but none of these known methods have proved entirely satisfactory.

Kett Electric Laboratory describe in U.K. Patent Specification No. 1,517,096 a means of monitoring carburization by measuring permeability in which an energizing coil is excited at a certain frequency and the e.m.f. induced in a detecting coil coupled magnetically to the energizing coil is measured. The detecting coil is mounted adjacent to the furnace tube to be measured, and the difference between the induced e.m.f. in the detecting coil and the induced e.m.f. in a similar non-detecting coil remote from the furnace tube gives a measure of the magnetic permeability of the tube. However, this is not a reliable measure of the degree of carburization because the magnetic permeability of the tube may also be influenced by other factors. In particular, highly ferro-magnetic oxides tend to form on the outside of the furnace tubes and the effect of these oxides on the permeability effectively drowns the changes due to carbon diffusion on the inner surface.

In an attempt to overcome this problem a device has been developed which employs two detecting coils of different diameters; the larger diameter detecting coil being intended to measure the total effect on permeability of carburization and oxides, with the smaller diameter detecting coil being intended to measure only the effect of the outer oxide layer. The difference between the e.m.f. induced in the two detecting coils is supposed to be a measure of the change in permeability resulting from carburization and thus capable of calibration to give a measure of the degree of carburization. However, we have established that the measurements do not provide a reliable measurement of degree of carburization in the presence of oxides and that the instrument fails to eliminate the dependance of the final readings upon the outer oxide layer.

It has now been found that carburization in furnace tubes can be measured even when the outer surface of the tubes is oxidised by means of a two frequency detection of magnetic permeability.

There are some descriptions in the prior art of testing methods using two or more A.C. signals to examine magnetic properties. For example, GB 600915 describes the inspection of surface layers, including decarburization depth, by applying different frequencies to the sample and observing high frequency losses using an oscillascope in the oscillator circuit. Samples are first tested at a frequency of about 1000 Hz and those with similar characteristics at that frequency are then separately tested at 50000 Hz to determine differences in their surface layers.

GB 804339 and GB 831102 also conern measurement of surface layers, by applying an A.C. signal of varying frequency to a sample and monitoring the change in the oscillator load.

GB 908228 describe a multi-frequency testing method, in which a perfect specimen is first tested at several frequencies to establish the frequency with zero response. Further samples are then screened only at that optimum frequency for defects.

GB 1521203 describes a testing technique for eliminating the effect of a known undesirable parameter in which the effect of this parameter is equalised for test signals of two frequencies which are then subtracted. This technique cannot be applied where the undesirable parameter is independently variable.

GB 2027893 describes the detection of change in electrically conductive articles by applying magnetic fields coextensively hereto at two different frequencies and measuring the difference between the signals detected at a pick-up probe by means of a controlled detector fed with a variable compensating signal. This device measures differences in the total composition of the article, and would not be capable of measuring localised and independently variable differences.

It has now been found that by selection of appropriate frequencies, a two frequency measurement may be employed to monitor internal carburization of furnace tubes even in the presence of independantly variable amounts of paramagnetic oxides on the outer surface thereof.

Accordingly, in one aspect this invention provides a device for monitoring the degree of internal carburization of furnace tubes comprising means for propagating first and second A.C. signals of different frequencies adjacent to the outer surface of a furnace tube to be tested such that the effective penetration depth of the first A.C. signal is at least the furnace tube wall thickness and the effective penetration depth of the second A.C. signal is not greater than the minimum uncarburized thickness of the furnace tube, at least one detecting coil arranged so that e.m.f.s are induced therein by the first and second A.C. signals respectively in dependence upon the magnetic permeability characteristics of the furnace tube at the penetration depth of the respective A.C. signals, and means for measuring a difference in level between the e.m.f.'s induced by the first and second A.C. signals so as to provide a resultant output which is a function of the degree of carburization of the furnace tube independent of variation in magnetic permeability on the outer surface thereof.

The invention utilizes the so-called "skin-effect" - that is, the phenomenon that the magnetic flux produced by an alternating current penetrates the conductor less as the frequency of the alternating current increases. For a given system there will be a frequency above which currents are only induced in the surface layer (or "skin") of the conductor. The first A.C. signal propagated by the device of the invention is of lower frequency than that at which the skin effect is observed; the first A.C. signal should be of sufficiently low frequency for the magnetic flux to penetrate the entire furnace tube wall (outer oxide layer, stainless steel tube and inner carburized layer) so that the e.m.f. induced by this signal in the first detecting coil is a function of the magnetic permeability of the entire tube. The second A.C. signal is of higher frequency than the first A.C. signal; it should be of sufficiently high frequency for the flux not to penetrate as far as the inner carburized layer, but not so high that it does not penetrate all the oxide layer.

- 8 -                                    0049951

The critical frequency at which the skin effect - to the desired extent - is observed is a function of the material and dimensions of the furnace tube and the requirements for the first and second A.C. signals are also effected by the thickness of the oxide layer and carburization thickness to be encountered. However, it is easily possible to determine empirically appropriate frequencies for the first and second A.C. signals for any given system given that the maximum degree of oxidation and carburization can be estimated. We have found that there is a significant non-ferro-magnetic thickness of furnace tube between the oxide layer and the carburized layer, so that there is a degree of tolerance in the frequency of the second A.C. signal without the penetration of that signal encroaching on the carburized layer.

By way of illustration it has been found that for steam cracker tubes, the first A.C. signal preferably has a frequency of from 70 to 100 Hz and most preferably 80 to 85 Hz. The second A.C. signal preferably has a frequency of 240 to 280 Hz.

It has been found to be highly desirable to choose A.C. signals in which the second A.C. signal is an integral multiple of the first A.C. signal, since this makes smooth frequency changeovers possible without discontinuing the A.C. wave of either signal, thus giving greater signal stability to the detector circuit. Preferably the second A.C. signal is three times the first A.C. signal. The two A.C. signals may be generated either using a single oscillator producing the desired low frequency and feeding this output fed to a multiplier to give a second A.C. signal which is a multiple of the first A.C. signal or by using two oscillators producing the two desired A.C. signals.

The first and second A.C. signals may be propagated in the furnace tube by means of a primary coil excited by the oscillator(s) producing A.C. signals of the appropriate frequency. It is possible to employ two primary coils, one for each of the first and second A.C. signals respectively; each coil is then connected to a separate source producing an alternating signal of the appropriate frequency. However, it is possible to employ a single primary coil together with switching means to connect the single primary coil either to a source for the first A.C. signal or to a source for the second A.C. signal. This arrangement has been found to be particularly satisfactory when using a switch controller which effects switching after counting a number of cycles predetermined for each of the two A.C. signals.

The effects of magnetic permeability at the two frequencies are detected by one or more detecting coils. If a single detecting coil is employed the detected signal at both high and low frequencies may be fed through a filter system to separate the e.m.f. signals induced by the high and low frequency A.C. signals. However, preferably two secondary detecting coils are employed, a first coil adapted to detect the e.m.f. induced by the first A.C. signal and a second coil adapted to detect the e.m.f. induced by the second A.G. signal. The e.m.f.s induced in the detecting coil(s) are compared by a measuring device, which effectively subtracts the two signals. Before being subtracted, the signal from each detecting coil is preferably rectified or demodulated and these rectified signals may be amplified as necessary to compensate for the difference in the e.m.f. response sensitivity at two frequencies.

In a preferred arrangement the first and second A.C. signals are progagated in the furnace tube alternately, and first and second detecting coils are provided so that an e.m.f. is induced alternately in each coil. These induced e.m.f. signals, preferably after being filtered to remove noise and peak detected to provide a rectified signal, are each fed to a sample-and-hold circuit comprising a switch and a memory device. The circuit controlling the switching of oscillators to the primary coil may also be adapted to control the switches in the two sample-and-hold circuits so that when the first A.C. signal is switched to the primary coil the switch connecting the first detecting coil with the corresponding memory is made and the switch connecting the second detecting coil with its corresponding memory is broken and vice versa. The stored detected outputs are subtracted, preferably after amplification, to give an output dependent upon the degree of carburization - hereinafter referred to as the "carburization signal".

Before the carburization signal is converted to a visible display, it may be amplified. Furthermore, signals of too low a level to be of interest may be suppressed as being of low accuracy because of interference or "noise". It may also be desirable to provide temperature compensation to nullify any effect of temperature upon the measuring operation.

After any such adjustments the carburization signal may be used to produce a visible indication and/or permanent record of the carburization. Thus, the carburization signal is preferably fed to an analogue display device, for example in the form of a meter. In addition, a permanent record may be obtained by feeding the carburization signal to a recording device such as a pen recorder.

These display and recording instruments are calibrated for each installation on which the monitoring device is used to establish the correlation between the displayed or recorded signal and the carburization depth. This may, be achieved by compensating for the signal resulting from

- 12 -

0049951

an uncarburized tube with no oxide layer, for example, taking a control reading from a sample of furnace tube that is known to be uncarburized and to have no outer oxide layer. The appropriate adjustment may then be applied to the carburization signal to provide a "zero" reading on the uncarburized, non-oxidised sample. Alternatively, a similar compensation may be carried out on each of the induced e.m.f. signals from the detecting coil(s) (following separation by a filter system of the induced e.m.f. signals, where necessary) before these e.m.f. signals are subtracted. The means used to effect the compensation may be, for example, a subtraction device for each of the high frequency and low frequency signals incorporated after the sample-and-hold circuits described hereinbefore, with each subtraction device being fed with a "zero" signal from a memory. The entries in the memories could be established by measurement on an uncarburized, non-oxidised tube.

The monitoring device of the invention may be used to assess the carburization thickness inside furnace tubes by means of spot checks at various points on the tube. A hand held detector may then be used comprising:

(a) the primary coil(s) electrically connectable to the sources for the first and second A.C. signals, and

(b)   the detecting coils electrically connectable to the means for measuring the difference in e.m.f.s induced in those coils.

The sources of the A.C. signals and the measurement means together with amplication, subtraction, compensation and display devices may be remote from the hand-hold detector while being electrically connectable to it.

It is highly desirable to measure carburization over as much of a furnace tube as possible as there may be significant variation in the degree of carburization over its length, with localised area of high carburization being particularly susceptible to failure. To monitor a length of tube it is most convenient to employ a self propelled carriage for the detector unit described above of the kind described in U.K. Patents Nos. 1,517,096 and 1,559,049. As the preferred monitoring device tracks along the furnace tube on such a self-propelled carriage the switching means alternately connects the first A.C. signal and the second A.C. signal to the primary coil and simultaneously switches the first detecting coil and the second detecting coil respectively to their associated memory devices. Since this switching takes a finite time during which the detector is moved along the furnace tube, the first and second A.C. signals are exposed to different portions of the furnace tube. However, provided that the distance moved is sufficiently small the inaccuracy in the comparison between the resultant induced e.m.f. is negligible. At a tracking speed of 5 m/min., which is found to be an acceptable speed in practical application, a measurement frequency of at least 15 Hz is a preferred minimum. By "measurement frequency" is means the rate of detection at both high and low frequencies - that is to say one cycle includes one detection at low frequency and one detection at high frequency, the two detection periods not necessarily being the same. At the preferred minimum measurement frequency there is a maximum movement of 5.56 mm during one cycle. Most preferably a measurement frequency greater than 20 Hz is employed.

The invention will now be described in more detail, though only by way of illustration, by reference to the accompanying drawings, in which:-

Figure 1 shows a self-propelled carriage fitted with a monitoring device of the invention being used to monitor carburization in a steam cracker furnace tube;

Figure 2 is a more detailed, but generally schematic view of the carriage shown in Figure 1 mounted on a section of furnace tube;

Figure 3 is a schematic block diagram of the monitoring device of the prior art;

Figure 4 is a schematic block diagram of the monitoring device of the invention;

Figure 5 is a more detailed block diagram of the monitoring device of the invention;

Figures 6, 7 and 8 are graphs showing the results obtained using monitoring devices of the prior art and of the invention to measure magnetic permeability; and

Figure 9 is a block diagram of an alternative embodiment of the monitoring device of the invention.

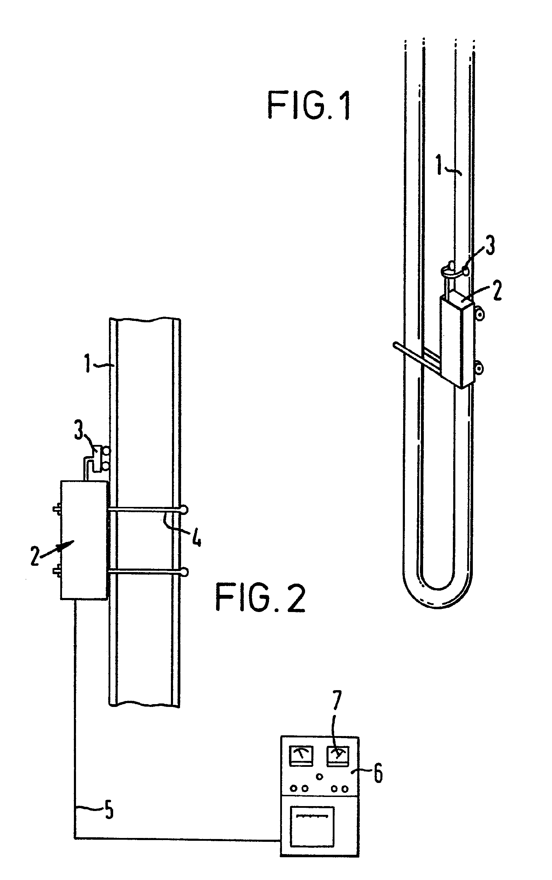

Figure 1 shows a furnace tube 1 in a steam cracker furnace in the course of inspection for carburization. A self-propelled carriage 2 is mounted on the tube and propels itself up and down furnace tube 1. Mounted on the carriage 2 is a monitoring device of the invention 3. As shown in more detail Figure 2 the carriage 2 is fastened around tube 1 by arms 4 and propelled by driven wheels or belts (not shown). The carriage 2 is electrically connected by cable 5 to the control and display unit 6 from which the carriage 2 may be controlled and where the carburization depth is registered on meter 7.

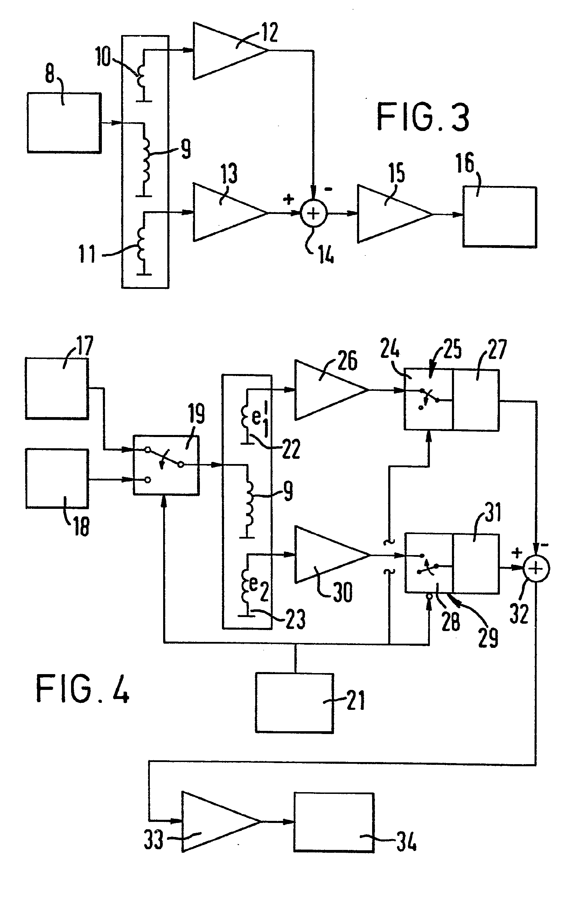

In the prior art monitoring device shown in Figure 3 an oscillator 8 producing a signal of 80 Hz excites a primary coil 9 in a detector mounted adjacent to the furnace tube wall (not shown). Detecting coil 10 is of relatively large diameter and the e.m.f. induced in that coil is intended to be a measure of the magnetic permeability of the furnace tube as a whole. Detecting coil 11 is of smaller diameter and is intended to measure the magnetic permeability of the oxide layer only. The induced e.m.f.s in coils 10 and 11 are amplified in amplifiers 12 and 13 respectively and then subtracted in gate 14 to give a signal supposedly a measure of magnetic permeability resulting from carburization alone. The signal is amplified in amplifier 15 and fed to an analogue display device and/or a recorder 16.

The monitoring device of the invention shown in Figure 4 comprises two oscillators: oscillator 17 has an output of 260 Hz, this being a frequency at which the skin effect is observed so that when the 260 Hz signal is fed via digital switch 19 to primary coil 9 the induced currents in a furnace tube (not shown) adjacent to coil 9 penetrate only the surface of the tube and thus only "see" the ferromagnetism of the superficial oxide layer. Oscillator 18 produces an output of 80 Hz and as in the prior art device this gives effective penetration of the complete wall thickness of a furnace tube when fed via switch 19 to primary coil 9. The switch 19 is triggered by a switch controller 21 providing pulses at 46 Hz. In the "on" state one oscillator is switched to primary coil 9, while in the "off" state the other oscillator is switched to primary coil 9. Thus, the measurement frequency is 23 Hz.

When oscillator 17 is switched to coil 9 the switch controller 21 also operates switch 24 of a sample-and-hold circuit 25 so as to connect detecting coil 22 via amplifier 26 to memory 27 of the sample-and-hold circuit 25. In the same state switch controller 21 operates switch 28 of sample-and-hold circuit 29 so as to disconnect detecting coil 23, which feeds via amplifier 30 to switch 28 from memory 31 of the sample-and-hold circuit 29. In the other state, when oscillator 18 is switched to primary coil 9, detecting coil 23 is switched to memory 31 and switch 24 is broken. Thus, an e.m.f. is induced in detecting coil 22 by a 260 Hz signal in primary coil 9 and an e.m.f. is induced in detecting coil 23 by an 80 Hz signal.

Switch controller 21 operates at an average switching frequency of 46 Hz (measurement frequency of 23 Hz) and memories 27, 31 hold signals from detecting coils 22, 23 over 4 cycles. The outputs from memories 27, 31 are then fed to a subtraction device 32 which takes the difference of these signals to give a signal which is a function of the magnetic permeability of the carburized zone of the furnace tube under test and thus of the thickness of the carburization. The signal resulting from this subtraction is amplified by amplifier 33 and then measured by an analogue device such as a meter and/or a recorder 34.

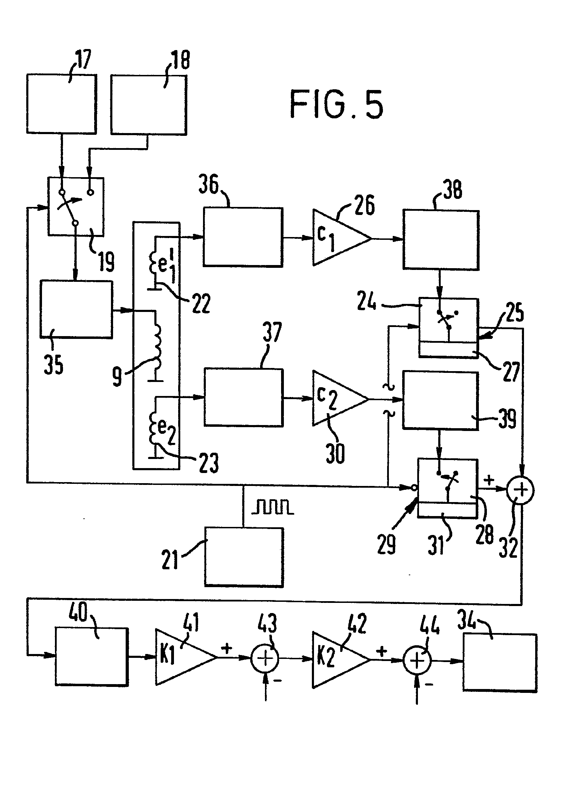

In the embodiment of the invention shown in Figure 5 further refinements are introduced. The A.C. signal switched by switch 19 from oscillator 17 or oscillator 18 is amplified before being fed to primary coil 9 by a booster 35 which helps to stabilise the output of the device.

The induced e.m.f.s in detecting coils 22 and 23 are of the same frequency as the energizing signals. To prevent stray signals of other frequencies affecting the permeability measurements the output from each detecting coil 22, 23 is filtered by an appropriate band pass filter; the output from detecting coil 22 is fed to amplifier 26 via 260 Hz band pass filter 36 and the output from detecting coil 23 is fed to amplifier 30 via 80 Hz band pass filter 37.

After filtering and amplification the detected signals are each demodulated in envelope demodulators 38, 39 respectively.

Following subtraction of the two detected signals to give a carburization signal, this latter signal is passed through a suppressor 40 for low level signals. Such signals are not accurate or strictly correlatable with carburization thickness and so may be misleading. Moreover, since they represent very low carburization their suppression does not interfere with the detection of high carburization levels likely to cause mechanical failure. The suppressed signal is then amplified in two stages 41, 42, with intermediate automatic adjustment in compensator 43 of the voltage to compensate for temperature variation giving rise to changes in response in the equipment. This temperature compensation is within the competence of one skilled in the art.

Following the second stage 42 of amplification the amplified signal is calibrated in terms of carburization thickness by subtracting the "zero" carburization voltage level in subtraction device 44 to give a calibrated output which is a substantially linear function of carburization thickness corrected to zero. This signal is fed to the meter and/or recorder 34. In an alternative embodiment (not shown) the "zero" calibration is made by two subtraction devices, one between detecting coil 22 and filter 36 and one between detecting coil 23 and filter 37. In this arrangement separate compensation is made in the high and low frequency induced e.m.f. signals.

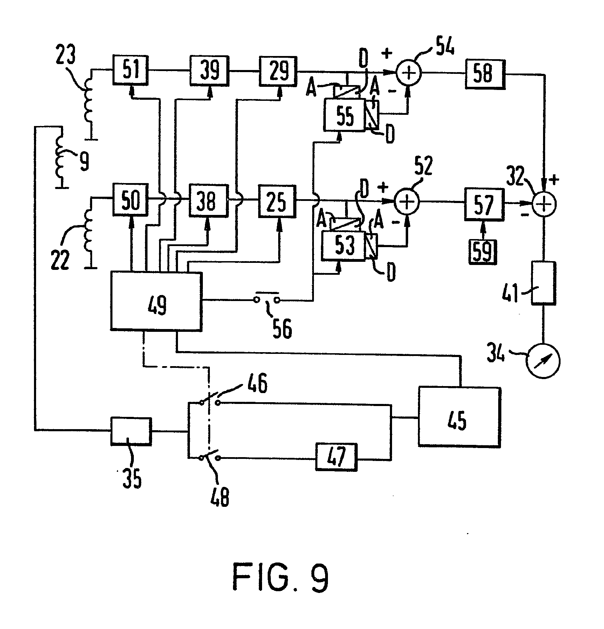

Figure 9 shows a further embodiment of the monitoring device of the invention. This is similar to the devices of Figures 4 and 5 and where possible the same numbering is used to identify identical parts.

A signal oscillator 45 produces an output of 85 Hz. This low frequency output is fed directly to switch 46. The low frequency output is also fed to multipler 47, which produces a high frequency output of three times the frequency of the oscillator - i.e. 255 Hz. This high frequency signal is fed to switch 48. Switches 56 and 48 are controlled by logic circuit 49. Switch 46 is made and switch 48 is broken to provide a low frequency A.C. signal via amplifier 35 to primary coil 9. The logic circuit 49 counts a predetermined number of cycles of the low frequency signals, then opens switch 46 and closes switch 48 to provide a high frequency A.C. signal via amplifier 35 to primary coil 9. The logic circuit counts a predetermined number of high frequency cycles then switches back to low frequency again by closing switch 46 and opening switch 48. This cycle continues so that alternately high and low A.C. signals are applied to primary coil 9.

The high frequency signal induces an e.m.f. in secondary coil 22 in dependence upon the magnetic pemeability of the uncarburized "skin" of a furnace tube (not shown) adjacent coils 9 and 22. This e.m.f. is amplified in a gated amplifier 50, and the amplified signal is fed via peak detector 38 to sample-and-hold circuit 25 as described for previous embodiments. Similarly the e.m.f. induced in coil 23 by the low frequency A.C. signal is amplified in gated amplifier 51 and fed via peak detector 39 to sample-and-hold circuit 29. These sample-and-hold circuits 25 and 29 are controlled by logic circuit 49 which acts as the switch controller described hereinbefore so that the

0049951

memories of the sample-and-hold circuits store respectively the signals derived from the predetermined number of high and low frequency A.C. signals to the primary coil.

Logic circuit 49 also controls the status of gated amplifiers 50 and 51 and peak detectors 38 and 39 in a similar manner. Thus, path 50-38-25 is active and 51-39-29 is inactive when switch 46 is closed, and path 50-38-25 is inactive and 51-39-29 is active when switch 48 is closed.

In the embodiment of Figure 9 the two signals are both given "zero" calibration before subtraction in device 32. Thus, the output from sample-and-hold circuit 25 is fed to subtraction device 52 where a "zero" adjustment stored in digital memory 53 is subtracted. Similarly a "zero" adjustment stored in digital memory 55 is subtracted from the output of sample-and-hold circuit 29 in subtraction device 54. The "zero" adjustments are introduced into memories 53 and 55 by taking measurements from a furnace tube sample known to be uncarburized. This calibration measurement is taken in the normal way but with normally-open pushbutton 56 closed so that the measured e.m.f.s are fed to the memories. Digital memories are used, and thus are provided with digital/analogue converters on inputs and outputs.

Following compensation the two signals are amplified by amplifiers 57 and 58. The amplifier 57 for the high frequency signal is provided with means 59 for adjusting the level of amplification relative to that of amplifier 58.

Subtraction in device 32 gives the carburization signal which is amplified in amplifier 41 before being fed to the analogue display 34.

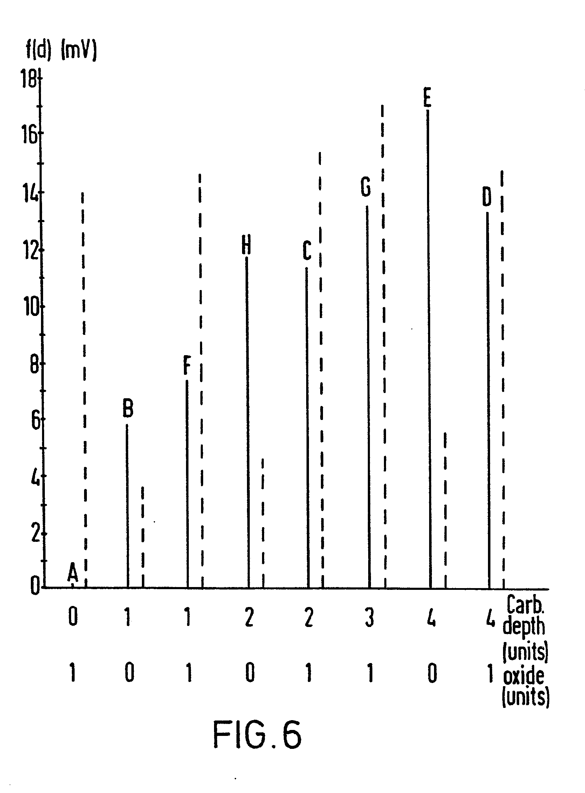

The invention will now be further described, again only by way of illustration, in the following examples and with particular reference to Figures 6, 7 and 8 of the drawings.

Example 1:  Simulated Furnace Tubes

In order to assess the effectiveness of the monitoring device of the invention in comparison with a prior art device measurement of magnetic permeability were taken from models simulating the ferro-magnetic properties of a furnace tube.  The models were composed of a metal-wood-metal sandwich: a central wood block (20 cm x 10 cm x 0.8 cm) simulates the non-magnetic stainless steel furnace tube, a relatively thin steel layer on one face of the wood block simulates the ferro-magnetic oxide layer and a relatively thin steel layer on the opposed face simulates the carburization layer.  The steel layers were made up of one or more sheets 0.05 cms thick and by varying the number of sheets on each side of the wood block different models were tested.  The devices of the prior art and of the invention were positioned with their detecting coils adjacent to the "oxide" steel layer and measurements of the magnetic permeability were recorded in the manner already described.

This test was crude in approach and made no attempt to simulate specific furnace tube conditions and the results obtained have no relevance in terms of their absolute magnitude. However, the relative measurements recorded are significant in terms of the correlation between the magnitude of the measured e.m.f. and the simulated carburization thickness and the dependence of these measurements upon the simulated oxide layer.

Tests were carried out on a prior art device (Kett LST-2200H availble from Kett Electric Laboratories of Japan as illustrated in Figure 3) and a device of the invention as illustrated in Figure 5. The results are shown graphically in Figure 6 where the magnitude of the e.m.f.'s measured for various combinations of "oxide" thickness and "carburization" thickness. The "carburization" and "oxide" are measured only in terms of the number of steel sheets employed and the figures have no absolute significance. In Figure 6 the broken lines show the results obtained with the prior art instrument, whereas the continuous lines show the results obtained with the device of the invention.

It is immediately apparent that there is no correlation between "carburization" thickness and the e.m.f. measured in the prior art instrument - for example, the "uncarburized" sample A gave a reading of more than twice that obtained from sample E with a "carburization" depth of 4 units. The influence of "oxide" on the measurements may be seen by comparing samples B and F, H and G and E and D.

By contrast, the e.m.f. measurements taken using the device of the invention increase with increasing "carburization" depth and show only a small "oxide" effect. With the exception of sample D which gave a low reading the e.m.f.'s measured with the device of the invention show very good correlation with the "carburization" thickness, certainly within the limitations of the simulation.

Example 2

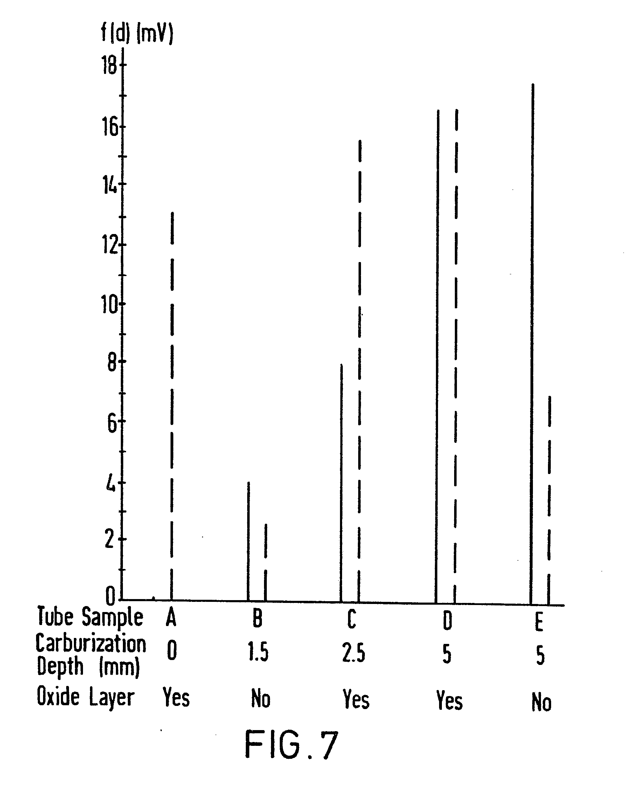

Using the same prior art instrument and device of the invention as employed in Example 1, tube samples taken from steam cracking furnace tubes were tested. Each tube sample was also macroetched, so revealing the carburized portion of the tube wall which has a different crystal structure. The carburization was measured and compared with the e.m.f.'s measured by the instruments under test. Oxide layers do not stand out sufficiently in macroetching to be measured quantitatively, but the presence or absence of oxide can be determined and this qualitative assessment appears in the results.  Figure 7 shows the results obtained, again using a broken line for the prior art and a continuous line for the invention.  Carburization depth is given in millimetres.

The prior art instrument only produced mutually significant results with samples B and E, where no oxide was present. On samples having oxide layers the prior art instrument gave very high readings with only a limited dependence on carburization depth.  The dominating effect on the readings of oxide makes the measurements of the prior art instrument wholly unreliable: sample A with no carburization gave a higher reading than sample E which is carburized to a depth of 5 mm.

The device of the invention gave outputs which showed an almost linear dependence on carburization depth, regardless of whether oxide was present or not.

Example 3

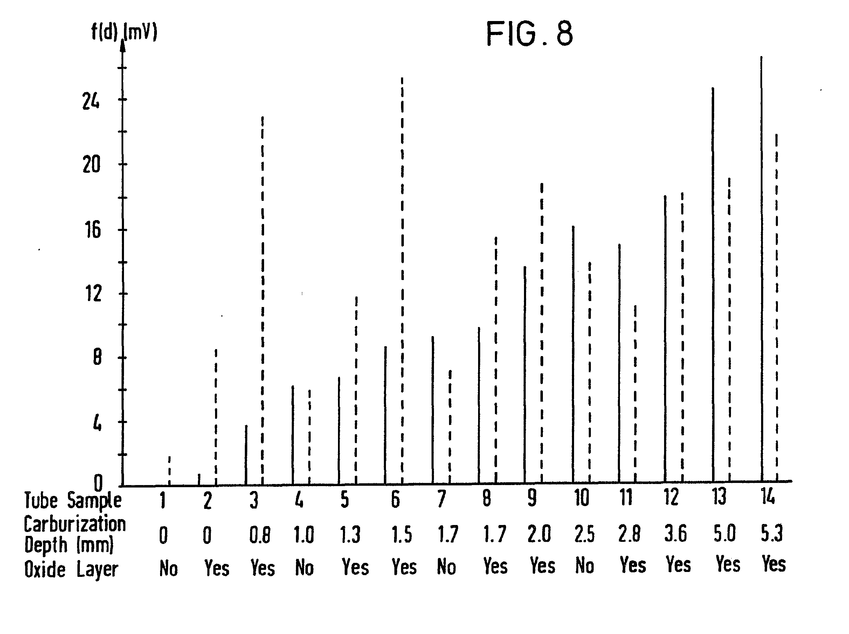

The procedure of Example 2 was repeated on further furnace tube samples and the results obtained are shown in Figure 8 using the same conventions.  Again the results obtained by the device of the invention show good correlation with carburization independently of oxide layers, whereas the effect of the oxide layers dominates the readings taken with the prior art instrument and prevents the e.m.f. readings from being a reliable indication of the degree of carburization.

- 1 -

0049951

CLAIMS

1. A device for monitoring the degree of internal carburization of furnace tubes comprising means for propagating an A.C. signal adjacent to the outer surface of a furnace tube to be tested and means for detecting the e.m.f. induced in a secondary detecting coil characterized in that to detect carburization independently of variations in magnetic permeability on the outer surface of the furnace tubes the device comprises means for propogating a first A.C. signal having an effective penetration depth of at least the furnace tube wall thickness, means for propogating a second A.C. signal having an effective penetration depth not greater than the minimum uncarburized thickness of the furnace tube, at least one secondary detecting coils arranged so that e.m.f.s are induced therein by the first and second A.C. signals respectively in dependence upon the magnetic permeability characteristics of the furnace tube at the penetration depth of the respective A.C. signals, and means for measuring a difference in level between the e.m.f.'s induced by the first and second A.C. signals coils so as to provide a resultant output which is a function of the degree of internal carburization of the furnace tube.

2.  A device as claimed in claim 1, in which the second A.C. signal has a frequency which is an integral multiple of of the frequency of the first A.C. signal.

3.  A device as claimed in claim 2, in which the frequency of the second A.G. signal is three times the frequency of the first A.C. signal.

4.  A device as claimed in either of claims 2 and 3, in which the first A.C. signal has a frequency of from 70 to 100 Hz.

5.  A device as claimed in claim 4, in which the first A.C. signal has a frequency of 80 to 85 Hz.

6.  A device as claimed in any of the preceding claims, which comprises a single primary coil together with switching means to connect the single primary coil either to a source for the first A.C. signal or to a source for the second A.C. signal.

7.  A device as claimed in claim 6, in which the switching means comprises a switch controller which effects switching after counting a number of cycles predetermined for each of the two A.C. signals.

8.  A device as claimed in any of the preceding claims, which comprises a first secondary detecting coil arranged so that e.m.f. is induced therein by the

- 3 -                    0049951

first A.C. signal and a second secondary detecting coil arranged so that e.m.f. is induced therein by the second A.C. signal.

9.  A device as claimed in claim 8, which comprises associated with each detecting coil an amplifier, a demodulator and a sample-and-hold circuit comprising a swtich and a memory device, arranged so that the e.m.f.s induced in the first and second detecting coils after being amplified and demodulated are each fed to the respective sample-and-hold circuits, and a subtraction device arranged so that the outputs from the sample-and-hold circuits are subtracted to give an output dependent upon the degree of carburization.

10.  A device as claimed in claim 9, in which the switch controller is adapted to control the switches in the two sample-and-hold circuits so that when the first A.C. switch oscillator is switched to the primary coil the switch connecting the first detecting coil with the corresponding memory is made and the switch connecting the second detecting coil with its corresponding memory is broken and vice versa.

11.  A device as claimed in claim 8 or claim 9, which comprises means for compensating for the effect of an uncarburized non-oxidised furnace on the output of the device, the compensation being effected on the outputs of the sample-and-hold circuits either before or after the outputs from the sample-and-hold circuits are fed to the subtraction device.

12. A device as claimed in any of the preceding claims, in the form of a first detector unit adapted to be moveable adjacent to a furnace tube and comprising:

(a) at least one primary coil electrically connectable to the sources for the first and second A.C. signals; and

(b) at least one secondary detecting coil electrically connectable to the means for measuring the difference in e.m.f.s induced therein; and remote therefrom, but electrically connectable thereto, a second unit comprising the sources of the first and second A.C. signals and means for measuring the difference in the induced e.m.f.s.

13 A method of monitoring the degree of internal carburization of furnace tubes by propagating an A.C. signal adjacent the furnace tube and measuring the e.m.f. induced in a secondary detecting coil adjacent the furnace tube characterizied in that a first A.C. signal is propogated adjacent the outer surface of a furnace tube to be tested with an effective penetration depth of at least the furnace tube wall thickness, a second A.C. signal is propogated adjacent the outer surface of the furnace tube with an effective penetration depth not greater than the minimum uncarburized thickness of the furnace tube, the difference is measured between the e.m.f.s induced by the first and second A.C. signals in dependence upon the magnetic permeability characteristics of the furnace tube at the penetration depth of the respective A.C. signals so as to provide an output which is a function of the degree of internal carburization of the furnace tube independent of variation in magnetic permeability on the outer surface thereof.

14. A method as claimed in claim 13, in which the second A.C. signal has a frequency of 3 times the first A.C. signal.

15. A method as claimed in claim 13 or claim 14, in which the first A.C. signal has a frequency of from 70 to 100 Hz.

16. A method as claimed in claim 15, in which the first A.C. signal has a frequency of 80 to 85 Hz.

17. A method as claimed in claim 13 or 14, in which the second A.C. signal has a frequency of 240 to 260 Hz.

18. A method as claimed in claim 13, which employs a monitoring device as claimed in any of claims 1 to 11.

FIG.1

FIG.2

FIG. 3

FIG. 4

FIG.5

FIG.6

FIG.7

FIG. 8

0049951

FIG. 9